# EUROPÄISCHE PATENTANMELDUNG

(11) **EP 0 780 103 A2**
(43) Veröffentlichungstag der Anmeldung: **25.06.1997**
(21) Anmeldenummer: 96114349.2
(22) Anmeldetag: 07.09.1996
(51) Int. Cl.: A61C 19/00

(54) **Bestrahlungsgerät**

(30) Priorität: 11.05.1996 DE 19619154; 22.12.1995 DE 19548330
(71) Anmelder: Heraeus Kulzer GmbH, 63450 Hanau (DE)
(72) Erfinder: Breuer, Uwe, 61273 Wehrheim (DE); Schödel, Dieter, Dr., 65193 Wiesbaden (DE); Oppawsky, Steffen, 61350 Bad Homburg (DE)
(74) Vertreter: Kühn, Hans-Christian

(57) **Zusammenfassung**

Die Erfindung betrifft ein Bestrahlungsgerät zur Aushärtung von Kunststoffen mit einem Gehäuse, an dem ein Lichtaustrittsteil angeordnet ist. Um ein Bestrahlungsgerät mit einem einfachen Aufbau und einem geringen Eigengewicht bereitzustellen, weist das Lichtaustrittsteil mindestens eine lichtemittierende Diode zur Aussendung einer Strahlung im Wellenlängenbereich von etwa 320 nm bis 550 nm auf.

## Beschreibung

Die Erfindung betrifft ein Bestrahlungsgerät zur Aushärtung von Kunststoffen mit einem Gehäuse, an dem ein Lichtaustrittsteil angeordnet ist sowie ein Verfahren zum Betreiben des Gerätes.

Derartige Bestrahlungsgeräte sind aus dem Stand der Technik vielfach bekannt. Beispielsweise aus DE 34 11 996 ist ein Bestrahlungsgerät zur Aushärtung von Dentalkunststoffen bekannt, Dieses Gerät ist als Handgerät ausgebildet, bei dem das Gehäuse als Lichtquelle eine Lampe, beispielsweise eine Halogenlampe enthält. Das Gehäuse enthält des weiteren die zur Lichterzeugung benötigten elektrischen Anschlüsse, gegebenenfalls einen Transformator zum Umsetzen der Netzspannung in die Betriebsspannung der Lichtquelle sowie außerdem Luftführungskanäle, einen Ventilator und Öffnungen zur Abfuhr der beim Betrieb des Bestrahlungsgerätes erzeugten Wärme. Das Licht wird im Inneren des Gehäuses in einen Lichtleiter eingekoppelt, der als Lichtaustrittsteil dient und an dessen außerhalb des Gehäuses angeordnetem Ende das von der Lichtquelle erzeugte Licht austritt. Das austretende Licht wird zur Aushärtung von Kunststoffen verwendet. Das aus DE 34 11 996 bekannte Bestrahlungsgerät ist als Handgerät flexibel einsetzbar zur Aushärtung von Dentalkunststoffen, wobei eine Aushärtung sowohl im Mund des Patienten als auch beispielsweise aus einem Arbeitstisch erfolgen kann. Des weiteren sind stationäre Bestrahlungsgeräte bekannt, die einen im Inneren ihres Gehäuses angeordneten Bestrahlungsraum aufweisen. Bei derartigen Geräten ist auf das Lichtaustrittsteil innerhalb des Gehäuses angeordnet und in den Bestrahlungsraum gerichtet. Es sind auch stationäre Geräte bekannt, bei denen als Lichtaustrittsteil ein Lichtleiter nach außen geführt wird. Dabei ist an dem äußeren Ende des Lichtleiters ein Handgriff angeordnet, mit dem der Lichtleiter geführt wird. Derartige Anordnungen werden ähnlich wie die oben beschriebene als Handgerät genutzt, haben jedoch aufgrund der begrenzten Länge des Lichtleiters eine begrenzte örtliche Reichweite.

Allen derartigen Geräten ist ein recht komplizierter Aufbau gemeinsam, da nicht nur Licht über eine mehr oder weniger große Distanz beispielsweise mit einem Lichtleiter geführt werden muß, sondern es muß auch die entstehende Wärme auf geeignete Weise abgeführt werden. Die ausreichende Wärmeabfuhr bedingt entsprechend große Abmessungen des Gehäuses sowie zusätzliche Einbauten, wie Ventilatoren.

Aufgabe der vorliegenden Erfindung ist es, ausgehend von den aus dem Stand der Technik bekannten Anordnungen eine Bestrahlungsgerät und ein Verfahren zum Betreiben des Gerätes bereit zu stellen, das einen einfachen Aufbau und ein geringes Eigengewicht aufweisen kann und gleichzeitig eine optimale Bestrahlung ermöglicht.

Erfindungsgemäß wird diese Aufgabe dadurch gelöst, daß das Lichtaustrittsteil mindestens eine lichtemittierende Diode (im weiteren als LED bezeichnet) zur Aussendung einer Strahlung im Wellenlängenbereich von etwa 320 nm bis etwas 550 nm, insbesondere von etwa 400 nm bis 500 nm aufweist. Dadurch können lichthärtende Kunststoffe ausgehärtet werden. Die bei der Verwendung von LEDs als Strahlungsquelle entstehende Wärme ist vernachlässigbar gering, so daß auf die üblichen Mittel zur Wärmeabfuhr verzichtet werden kann. Außerdem kann die Stromversorgung der LED über ein praktisch beliebig langes Kabel erfolgen, so daß die zur Erzeugung der elektrischen Energie notwendigen und hinreichend bekannten Bauelemente an einem passenden Ort fest installiert werden können. Dadurch kann das Bestrahlungsgerät selbst sehr klein und handlich ausgebildet werden und ist sehr flexibel einsetzbar. Beispielsweise ist es möglich, die Energieversorgung für derartige Bestrahlungsgeräte ähnlich dem üblichen elektrischen Netz auszulegen, bei dem an verschiedenen Steckdosen Energie abgegriffen werden kann. So benötigt man zur Bestrahlung an beliebigen Orten lediglich ein Gehäuse, das als Griffstück sehr klein ausgebildet werden kann und an dem das Lichtaustrittsteil angeordnet ist, das an seinem äußeren Ende die LED trägt. Das Bestrahlungsgerät kann dabei als Handgerät oder als stationäres Gerät ausgebildet sein. Während bei Handgeräten die gute Handhabbarkeit und Beweglichkeit durch geringe Abmessungen ermöglicht werden, kann ein stationäres Gerät der Größe der Bestrahlungskammer eng angepaßt werden. Darüber hinaus hat eine derartige Anordnung den Vorteil, daß die benötigte Energie wesentlich geringer ist als bei herkömmlichen Geräten, da LEDs, wie oben beschrieben, einen wesentlich höheren Wirkungsgrad als herkömmliche Lampen ausweisen. Dies hat außerdem zur Folge, daß durch die Arbeit mit niedrigeren Strömen und Spannungen die Sicherheit für die Bedienperson erhöht wird.

Das Bestrahlungsgerät weist zweckmäßigerweise einen Sensor oder eine ähnliche Anordnung zur Messung der Intensität des von der LED abgestrahlten Lichtes auf, der über eine Auswerteeinheit zur Auswertung und Weiterverarbeitung des Intensitätssignals mit einer Anzeige, z. B. einer optischen Anzeige (die auch als LED ausgebildet sein kann) verbunden ist, um ein Unterschreiten eines vorbestimmten Grenzwertes der Intensität der Strahlung der LED der Bedienperson anzugeben. Dies ist wichtig, weil LEDs nicht plötzlich ihre Lebensdauer beenden, sondern langsam an Intensität verlieren.

Vorzugsweise weist das Gehäuse ein Griffteil mit Schalter auf, so daß die Bedienung erleichtert wird.

Das Halbleitermaterial der LED ist vorteilhafterweise ein Galliumnitrid, Siliziumcarbid oder Zinkselenid.

Es ist zweckmäßig, daß jeweils mehrere, vorzugsweise drei oder fünf LED zu einer Lichtquelle gebündelt sind. Dadurch wird die Intensität wesentlich erhöht. Insbesondere ist es vorteilhaft, daß die gebündelten LED in einer gemeinsamen Kapselung angeordnet sind, wobei die Lichtaustrittsseite der Kapselung zweckmäßigerweise als optische Linse ausgebildet ist, die den austretenden Lichtstrahl aller gebündelten LED fokussieren kann. Die Kapselung bewirkt eine Verringerung der Baugröße und eine bessere Handhabung der LED während der Montage. Des weiteren können die Lichtstrahlen aufgrund einer geringen Anzahl von Lichtquellen besser gerichtet werden.

Die der Erfindung zugrundeliegende Aufgabe wird für ein Verfahren zum Betreiben des eingangs beschriebenen Gerätes dadurch gelöst, daß der Betriebsstrom der LED gepulst ist. Dadurch kann eine wesentlich höhere Intensität erreicht werden. Eine LED, die bei konstantem Strom von 20 mA betrieben wird, kann gepulst mit etwa 100 mA betrieben werden. Dabei werden Lichtstärken um etwa 1000 mcd erzielt. Zweckmäßig ist es, mit Impulsdauern von jeweils etwa 10 ms zu arbeiten. Das Verhältnis zwischen Impuls und Pause sollte etwa 1 : 10 betragen. Bei Bündelung von mehreren LED ist es zweckmäßig, die LED jeweils einzeln und phasenversetzt zu pulsen. Dabei kann die Pulsfrequenz während des Betriebs erhöht werden, so daß der Aufbau von Spannungen in dem zu bestrahlenden Material verhindert wird. Während oder nach der Erhöhung der Pulsfrequenz kann der Betriebsstrom der LED bis zu dem möglichen Maximalwert erhöht werden. Für den Impulsbetrieb der LED können die üblichen, dem Fachmann geläufigen Schaltungsanordnungen verwendet werden.

Die Erfindung ist weiterhin auf die Verwendung des erfindungsgemäßen Bestrahlungsgerätes zur Aushärtung von Dentalkunststoffen gerichtet. Gerade in einer Zahnarztpraxis oder auch beim Dentaltechniker werden sehr kleine Kunststoffmengen ausgehärtet. Mit dem erfindungsgemäßen Bestrahlungsgerät lassen sich diese kleinen Mengen besonders vorteilhaft aushärten, da der Lichtstrahl der LED gut führbar ist. Durch die Möglichkeit, das Gehäuse mit dem Handgriff sehr klein auszubilden, kann auch im Mund des Patienten an nahezu jeder beliebigen Stelle bestrahlt werden.

Erfindungsgemäß ist das Bestrahlungsgerät auch zur Aushärtung von technischen Kunststoffen zu verwenden, beispielsweise von Kunststoffen, die in der Histologie oder Metallographie zur Einbettung von Proben verwendet werden.

Nachfolgend wird ein Ausführungsbeispiel der Erfindung anhand einer Zeichnung näher erläutert.
- Fig. 1: zeigt ein erfindungsgemäßes Handgerät.
- Fig. 2: zeigt ein erfindungsgemäßes stationäres Gerät, schematisch und
- Fig. 3: zeigt mehrere gemeinsam gekapselte LED in der Draufsicht (a) und in der Seitenansicht (b).

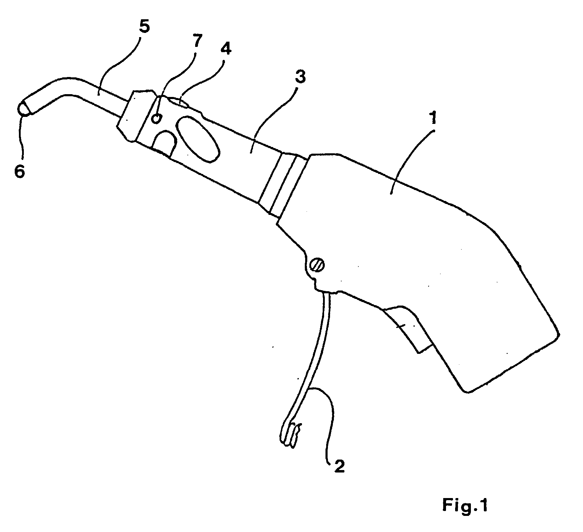

Das erfindungsgemäße Bestrahlungsgerät in Figur 1 weist ein Gehäuse 1 auf, das eine Zuleitung 2 für die elektrische Energiezufuhr besitzt. Das Gehäuse 1 ist als Gehäuse eines nicht ortsfesten Handgerätes ausgestaltet. Es weist ein Griffteil 3 auf mit einem Schalter 4. Das Griffteil ist im wesentlichen zylinderförmig ausgebildet, wobei an einem Ende des Zylinders ein Lichtaustrittsteil 5 angeordnet ist, an dessen äußerem Ende die LED 6 angeordnet ist. Die LED 6 ist auf der Basis eines Galliumnitrids gebildet. Das Lichtaustrittsteil 4 hat die Form eines flexibelen Stabes, der entsprechend den Notwendigkeiten am Bestrahlungsort gebogen werden kann. Die LED 6 sendet Strahlen im Wellenlängenbereich von etwa 320 bis 550 nm, insbesondere 400 bis 500 nm aus. Die Strahlungsenergie beeinflußt die Zeit, die zur Aushärtung des Kunststoffes notwendig ist und ist entsprechend steuerbar.

Das Bestrahlungsgerät weist eine Kontroll-LED auf, die als Anzeige 7 zum Signalisieren des alterungsbedingten Unterschreitens einer vorbestimmten Grenzintensität der Stahlung der LED 6 fungiert. Zur Messung und Auswertung der Intensität der Stahlung der LED 6 können übliche und bekannte Anordnungen verwendet werden.

Anstelle der in der Zeichnung dargestellten Anordnung sind auch andere Anordnungen bzw. Ausbildungen eines Gehäuses mit Griffteil denkbar. Beispielsweise kann das Gehäuse 1 als Ganzes als Griffteil 3 ausgebildet sein, wobei das Griffteil 3 die Form einer Verdickung des Lichtaustrittsteiles 5 hat.

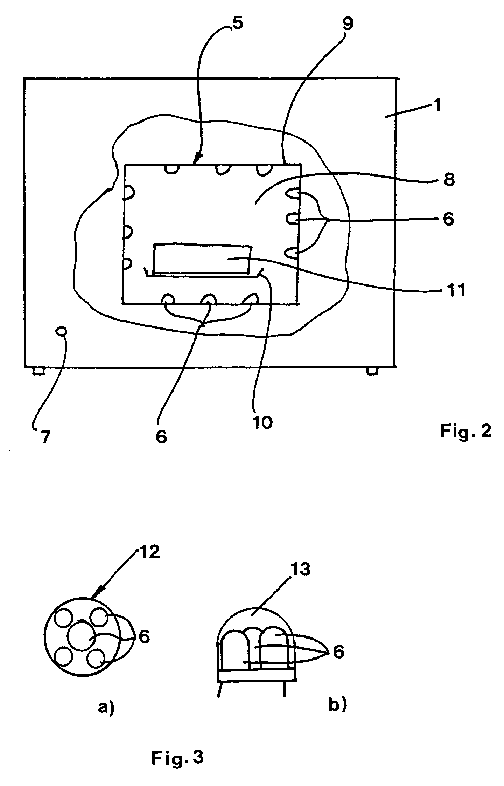

Auch Ausführungsformen der Erfindung sind denkbar, bei denen das Lichtaustrittsteil mehrere LED beträgt, beispielsweise ein stationäres Bestrahlungsgerät mit einer im Gehäuse 1 angeordneten Bestrahlungskammer kann eine Vielzahl von LEDs 6 aufweisen, die den Bestrahlungsraum von mehreren Seiten umgeben, so daß ein auszuhärtendes Kunststoffteil allseitig gleichmäßig bestrahlt werden kann. In Figur 2 wird ein derartiges Bestahlungsgerät dargestellt. In einem Gehäuse 1 ist ein üblicher Bestrahlungsraum 8 angeordnet, der von LEDs 6 umgeben ist. Die LEDs 6 können an einem käfigähnlichen Gestell 9 um die Aufnahme 10 für das zu bestahlende Teil 11 (z. B. Dentalteil) angeordnet sein. An dem Gehäuse 1 ist neben in Figur 2 nicht dargestellten Bedienelementen die Anzeige 7 angeordnet.

Die in den Figuren 1 und 2 gezeigten LED können durch gebündelte LED 6 gebildet werden, wie sie in Figur 3 dargestellt sind. Dabei können beispielsweise 3 oder 5 einzelne LED 6 in einer Kapselung 12 angeordnet sein, die eine gemeinsame Konvexlinse 13 aufweist. Die LED 6 können gepulst mit einem Strom von 100 mA betrieben werden, wobei das Verhältnis von Impulsdauer zu Pausendauer 10 ms zu 100 ms (1 : 10) beträgt. Dabei wird eine Lichtstärke von etwa 1000 mcd erzielt. Ab Beginn der Bestrahlung werden die Pulsfrequenz und der Strom kontinuierlich erhöht. Durch diese Intensitätssteigerung wird die Ausbildung von Spannungen in dem zu bestrahlenden Material (Dentalkunststoffe oder technische Kunststoffe) verhindert.

## Patentansprüche

1. Bestrahlungsgerät zur Aushärtung von Kunststoffen mit einem Gehäuse, an dem ein Lichtaustrittsteil angeordnet ist, dadurch gekennzeichnet, daß das Lichtaustrittsteil (5) mindestens eine lichtemittierende Diode (LED) (6) zur Aussendung einer Strahlung im Wellenlängenbereich von etwa 320 nm bis 550 nm aufweist.

2. Bestrahlungsgerät nach Anspruch 1, dadurch gekennzeichnet, daß das Gehäuse (1) ein Griffteil (3) mit Schalter (4) aufweist.

3. Bestrahlungsgerät nach Anspruch 1 oder 2, dadurch gekennzeichnet, daß ein Sensor zur Messerung der Intensität des von der LED (6) abgestrahlten Lichtes vorgesehen ist, der über eine Auswerteeinheit mit einer Anzeige (7) verbunden ist zur Anzeige des Abfalls der Lichtintensität der LED (6) unter einen vorbestimmten Grenzwert.

4. Bestrahlungsgerät nach einem der Ansprüche 1 bis 3, dadurch gekennzeichnet, daß das Halbleitermaterial der LED (6) ein Galliumnitrid, Siliziumcarbid oder Zinkselenid ist.

5. Bestrahlungsgerät nach einem der Ansprüche 1 bis 4, dadurch gekennzeichnet, daß es als Handgerät ausgebildet ist.

6. Bestrahlungsgerät nach einem der Ansprüche 1 bis 4, dadurch gekennzeichnet, daß es als stationäres Gerät ausgebildet ist.

7. Bestrahlungsgerät nach einem der Ansprüche 1 bis 6, dadurch gegekennzeichnet, daß jeweils mehrere, vorzugsweise drei oder fünf LED (6) zu einer Lichtquelle gebündelt sind.

8. Bestrahlungsgerät nach Anspruch 7, dadurch gekennzeichnet, daß die gebündelten LED (6) in einer gemeinsamen Kapselung (12) angeordnet sind.

9. Bestrahlungsgerät nach Anspruch 8, dadurch gekennzeichnet, daß die Lichtaustrittsseite der Kapselung (12) als optische Linse (13) ausgebildet ist.

10. Verfahren zum Betreiben eines Gerätes nach einem der Ansprüche 1 bis 9, dadurch gekennzeichnet, daß der Betriebsstrom der LED (6) gepulst ist.

11. Verfahren nach Anspruch 10, dadurch gekennzeichnet, daß die Impulsdauer etwa 10 ms beträgt.

12. Verfahren nach Anspruch 10, dadurch gekennzeichnet, daß das Verhältnis Impuls/Pause etwa 1/10 ist.

13. Verfahren nach Anspruch 10, dadurch gekennzeichnet, daß mehrere LED (6) jeweils einzeln und phasenversetzt gepulst werden.

14. Verfahren nach Anspruch 10, dadurch gekennzeichnet, daß während des Betriebs die Pulsfrequenz erhöht wird.

15. Verfahren nach Anspruch 14, dadurch gekennzeichnet, daß während oder nach der Erhöhung der Pulsfrequenz der Betriebsstrom der LED (6) erhöht wird.

16. Verwendung des Bestrahlungsgerätes nach Anspruch 1 zur Aushärtung von Dentalkunststoffen.

17. Verwendung des Bestrahlungsgerätes nach Anspruch 1 zur Aushärtung von technischen Kunststoffen.
